# EUROPÄISCHE PATENTSCHRIFT

(11) **EP 2 273 178 B1**
(45) Veröffentlichungstag und Bekanntmachung des Hinweises auf die Patenterteilung: **02.07.2014**
(21) Anmeldenummer: 10013252.1
(22) Anmeldetag: 21.10.2008
(51) Int. Cl.: F16M 11/04, F16M 11/14

(54) **Stativkopf**
Tripod head
Tête de trépied

(30) Priorität: 30.10.2007 DE 102007052039
(43) Veröffentlichungstag der Anmeldung: 12.01.2011
(62) Teilanmeldung aus: 08844824.6
(73) Patentinhaber: FLM GmbH Foto-, Licht- und Meßtechnisches Zubehör, 79312 Emmendingen (DE)
(72) Erfinder: Bürklin, Werner, 79312 Emmendingen (DE)
(74) Vertreter: Maucher, Wolfgang

(56) Entgegenhaltungen:
- EP-A- 1 365 187
- EP-A- 1 473 510
- FR-A- 2 799 807
- US-A- 3 612 462
- US-A1- 2007 147 829

## Beschreibung

Die Erfindung betrifft einen Stativkopf mit einer Haltevorrichtung zur Aufnahme einer Kamera, eines Fernglases, eines Spektivs oder dergleichen optischen Instruments mit einer Wechselplatte, mit einer Basis zur Montage an einem Stativ oder dergleichen Tragegestell, die eine Schwalbenschwanzführung mit einer Führungsschiene zur verschieblichen Lagerung der Wechselplatte und einer zur Basis relativ beweglichen Klemmvorrichtung zur Festlegung der Wechselplatte in der Führungsschiene), wobei an der Basis längsseitig die Führungsschiene der Schwalbenschwanzführung angeformt ist und wobei die Klemmvorrichtung im wesentlichen zwei Stellungen aufweist, bei welchen in einer Schließstellung die Wechselplatte verschieblich in der Führung aufgenommen ist und in einer Offenstellung die Wechselplatte zur Aufnahme freigegeben ist, wobei die Klemmvorrichtung durch Auflegen der mit dem optischen Instrument verbindbaren Wechselplatte von ihrer Offenstellung in ihre Schließstellung überführbar ist und eine in Längsrichtung orientierte segmentförmige Öffnung aufweist, welche die Gegenführung der Schwalbenschwanzführung bildet.

Aus der DE 27 47 677 A1 ist bereits ein Stativkopf vorbekannt, der eine Wechselplatte hat, an der eine Kamera, ein Fernglas, ein Spektiv oder dergleichen optisches Gerät befestigt werden kann. Dieser Wechselplatte ist eine Basis zugeordnet, die an einem Stativ oder dergleichen Tragegestell befestigt werden kann. An der Basis ist eine Schwalbenschwanzführung mit einer Führungsschiene zur verschieblichen Lagerung der Wechselplatte und einer zur Basis relativ beweglichen Klemmvorrichtung zur Festlegung der Wechselplatte in die Führungsschiene vorgesehen. Die Klemmvorrichtung kann als ein Schwenkhebel ausgestaltet sein, der zwischen einer die Wechselplatte zur Entnahme freigebenden Offenstellung und einer Schließstellung verdrehbar ist, in welcher Schließstellung die Wechselplatte verschieblich in der Führung aufgenommen ist. Während der Schwenkhebel in seiner Offenstellung die für die Wechselplatte bestimmte Ausnehmung in der Basis freigibt, wird die Wechselplatte in der Schließstellung des Schwenkhebels der Basis blockiert. Da die Wechselplatte in der Offenstellung noch in der Basis gesichert ist und da zur Sicherung der Wechselplatte in der Basis noch ein Verdrehen des Schwenkhebels erforderlich ist, ist der vorbekannte Stativkopf für eine einzelne Bedienperson nur schwer handhabbar, insbesondere wenn diese Bedienperson ein schweres optisches Gerät an dem aus DE 27 47 677 A1 vorbekannten Stativkopf befestigen will. Wechselplatten für Stativköpfe sind außerdem aus der US 3,612,462 und der EP 1 365 187 A1 bekannt, wobei bei ersterer die Wechselplatte zwar mit einer Sicherung versehen ist, diese aber droht, sich bei Verkippen der dortigen Klemmvorrichtung unter Last selbständig wieder zu öffnen, so dass dieser Stativkopf für einen schnellen Wechsel des optischen Instruments an dem Stativ nur bedingt geeignet erscheint.

Es besteht daher die Aufgabe, einen Stativkopf zu schaffen, der im Vergleich zum oben beschriebenen Stand der Technik bei erhöhter Tragkraft insbesondere auch für schwere optische Instrumente eine einfache und sichere Positionierung des betreffenden Instruments mit der Möglichkeit eines schnellen Austauschs des Instruments an dem Stativ gestattet.

Die im geltenden Hauptanspruch beschriebene Haltevorrichtung mit Wechselplatte dient beispielsweise beim Fotografieren o- der Filmen dazu, an einem Stativ auf bequeme Weise zwischen verschiedenen, gegebenenfalls auch schweren und unhandlichen Kameras, etwa mit verschiedenen Filmen oder Objektiven, wechseln zu können, ohne aufwendig die Kamera vom Stativkopf schrauben zu müssen.

Bei größeren und schwereren optischen Instrumenten haben sich daher solche Wechselsysteme durchgesetzt, bei denen eine Wechselplatte mit zumeist mehreren Schrauben an dem optischen Instrument befestigt wird und die Wechselplatte an dem Stativkopf befestigt wird. Dabei sind Systeme mit Schwalbenschwanzführungen bekannt, wobei die Wechselplatte in die Führung eingeschoben und durch eine Feststelleinrichtung gegen Verschieben gesichert werden kann. Da die Wechselplatte zumeist klein im Vergleich zum optischen Instrument ist und daher von oben nicht sichtbar ist, muss zum Einfädeln der Wechselplatte die Führung entweder ertastet werden oder der Benutzer muss sich bücken, was beides bei einem entsprechend schweren optischen Instrument umständlich oder unmöglich ist.

Es ist daher Aufgabe der Erfindung, einen Stativkopf zu schaffen, der im Vergleich zum Stand der Technik eine höhere Tragkraft aufweist und eine einfache Wechselmöglichkeit insbesondere für schwere optische Instrumente aufweist.

Diese Aufgabe wird erfindungsgemäß dadurch gelöst, dass an der der Führungsschiene gegenüber liegenden Längsseite eine Nut angeordnet ist, in der eine zylinderförmige Klemmvorrichtung um eine Längsachse drehbar gelagert ist, und dass an der Klemmvorrichtung ein federbeaufschlagtes Sicherungselement gegen unbeabsichtigtes Drehen der Klemmvorrichtung vorgesehen ist, wobei die Federkraft der Feder senkrecht zur Drehbewegungsrichtung der Klemmvorrichtung wirkt.

Die Klemmvorrichtung der erfindungsgemäßen Haltevorrichtung dient einerseits als Teil der Führung dazu, dass die Wechselplatte entlang der Längsachse verschieblich geführt wird und an einer gewünschten Position fixiert werden kann. Dies ist zur Ausrichtung des gehaltenen optischen Instruments wichtig.

Weiterhin erlaubt die Haltevorrichtung in der Offenstellung ein bequemes Einsetzen der Wechselplatte und damit des optischen Instruments von der Breitseite her. Damit entfällt das umständliche Einfädeln der Wechselplatte von der Schmalseite her in die Führung. Insbesondere bei der Verwendung von schweren und/oder sperrigen optischen Instrumenten stellt diese Befestigungsmöglichkeit eine enorme Erleichterung dar, da die Führung zumeist nicht sichtbar unter dem optischen Instrument verschwindet und bestenfalls ertastet werden kann. In horizontaler Stellung der Haltevorrichtung kann die Wechselplatte nun einfach von oben in die Haltevorrichtung eingehakt werden, was auch mit schweren Geräten leicht möglich ist.

Die Sicherung verhindert zudem das Lösen der Klemmvorrichtung, so dass die Wechselplatte nicht unbeabsichtigt aus der Führung kippen kann. Eine weitere Sicherung verhindert auch dass die Wechselplatte in Längsrichtung unbeabsichtigt aus der Führung geschoben werden kann.

Durch die erfindungsgemäße Neige- und Haltevorrichtung ergibt sich insgesamt ein Stativkopf, der hoch belastbar und gleichzeitig einfach zu bedienen ist, insbesondere beim Wechsel der optischen Instrumente.

Weitere vorteilhafte Merkmale der Erfindung ergeben sich aus den Unteransprüchen und dem Ausführungsbeispiel, das nachfolgend anhand der Zeichnungen näher erläutert ist.

Es zeigen:
- Fig. 1: ein Längsschnitt durch einen erfindungsgemäßen Stativkopf mit Haltevorrichtung und Wechselplatte,
- Fig. 2: ein Querschnitt durch den Stativkopf,
- Fig. 3: ein Querschnitt durch die Haltevorrichtung mit halb eingerasteter Wechselplatte und
- Fig. 4: eine Aufsicht der Haltevorrichtung.

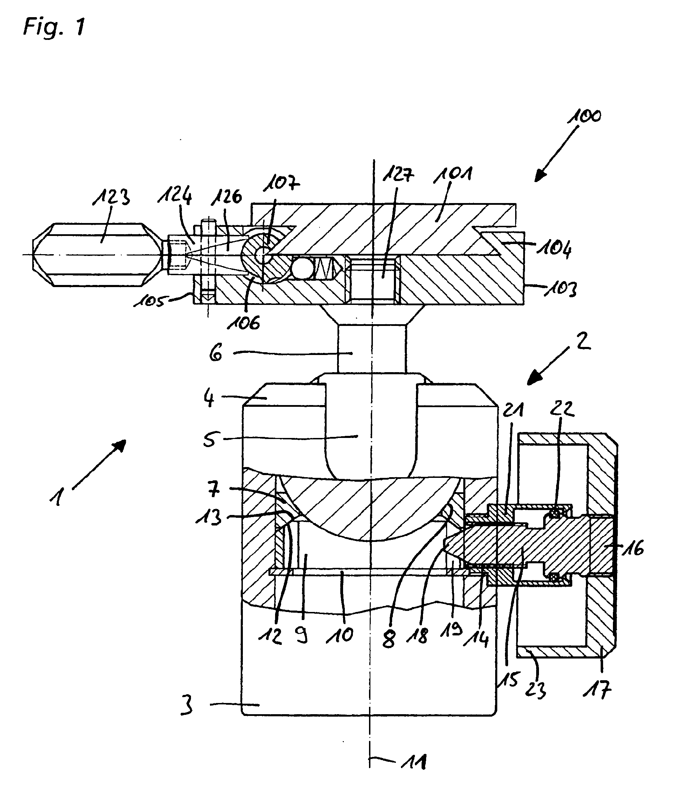

Die Fig. 1 zeigt einen im Ganzen mit 1 bezeichneten Stativkopf mit einer nicht-erfindungsgemäßen Neigevorrichtung 2 und einer daran befestigten erfindungsgemäßen Haltevorrichtung 100 mit einer Schnellwechselplatte 101.

Die Neigevorrichtung 2 weist ein etwa zylinderförmiges Lagergehäuse 3 auf, das als Hohlzylinder ausgebildet ist. An seinem oberen Ende 4 ist ein in der Abbildung nicht sichtbarer, rechtwinklig nach innen gerichteter Flansch angeordnet, der eine obere Lagerschale für ein Kugelgelenk bildet. An dem Flansch ist ein ebenfalls durch die Teilschnittansicht nicht sichtbares Gleitlager mit einer vorzugsweise sphärischen Gleitfläche angeordnet, das mit einer Gelenkkugel 5 zusammenwirkt.

Die Gelenkkugel 5 weist in axialer Richtung des Lagergehäuses 3 einen geraden Fortsatz 6 mit einem Gewinde auf, an dem eine Nutzlast befestigt werden kann. Unterhalb der Gelenkkugel 5 ist ein weiteres, axial verschiebliches Gleitlager 7 mit einer sphärischen, an die Kugel 5 angepassten Lagerfläche 8 angeordnet. An das Gleitlager 7 schließt sich ein Klemmring 9 an. Die gesamte Anordnung wird durch ein Widerlager 10 nach unten abgestützt und damit im Lagergehäuse 3 gehalten.

Der Klemmring 9 weist einen im Vergleich zum Innendurchmesser des Lagergehäuses 3 reduzierten Umfang auf. Weiterhin verfügt der Klemmring 9 an seiner Oberkante eine zur Längsmittelachse 11 in Richtung zur Gelenkkugel 5 verjüngende Schrägfläche 12, die mit einer komplementär geformten Gegenschräge 13 an der Unterseite des Gleitlagers 7 zusammenwirkt.

Im Lagergehäuse 3 ist ungefähr auf der Höhe des Klemmringes 9 eine Gewindebohrung 14 angeordnet, in der ein Gewindebolzen 15 quer zur Längsmittelachse 11 des Lagergehäuses 3 bewegt werden kann. Am äußeren Ende 16 des Gewindebolzens 15 ist ein Handrad 17 zur manuellen Betätigung angeordnet. Das innere Ende 18 ist etwa konisch zulaufend ausgeformt und greift, in einen axialen Spalt 19 im Klemmring 9 ein. Der Spalt 19 wirkt dabei mit dem konischen Ende 18 des Gewindebolzens 15 derart zusammen, dass bei zunehmendem Eindringen des Gewindebolzens 15 in den Spalt 19, der Klemmring 9 aufgeweitet wird. Etwa gegenüber dem Spalt 19 weist der Klemmring 9 eine Materialschwächung 20 auf, um ein einfacheres Aufweiten zu ermöglichen.

Beim Aufweiten des Klemmringes 9 wird nun durch das Zusammenwirken der Schrägflächen 12, 13 das untere Gleitlager 7 axial in Richtung der Gelenkkugel 5 verdrängt, wodurch ein höherer Anpressdruck erzeugt wird. Die Gelenkkugel 5 wird dadurch fester gegen das obere Gleitlager gedrückt und durch die höhere Reibung festgesetzt. Durch stärkeres Aufweiten des Klemmringes 9 wird die Gelenkkugel 5 fester gehalten.

Da der Klemmring 9 über den gesamten Umfang des Gleitlagers 7 gleichmäßig wirkt, ist eine sehr homogene Krafteinwirkung gegeben. Es entstehen bei diesem Klemmvorgang keine Dreh- oder Kippmomente auf das Gleitlager 7, so dass Beschädigungen des Lagergehäuses 3 oder des Gleitlagers 7 durch Verkanten praktisch ausgeschlossen sind. Zudem ist durch die vollumfängliche Abstützung des Gleitlagers 7 die Tragkraft der Neigevorrichtung 2 wesentlich hoher als im Stand der Technik.

Beim Ausdrehen des Gewindebolzens 15 wird der Klemmring 9 durch die eigene elastische Federkraft wieder zusammengezogen. Das Gleitlager 7 kann, durch die Gewichtskraft bedingt, nach unten rutschen und so die Gelenkkugel 5 für Bewegungen freigeben.

Der Gewindebolzen 15 ist zum Schutz vor Verschmutzung von einer an das Lagergehäuse 3 angeformten zylinderförmigen Buchse 21 umgeben, wobei in einer Nut an dem Gewindebolzen 15 ein O-Ring 22 eingesetzt ist, der andererseits an der Innenwand der Buchse 21 anliegt. Das Handrad 17 am Ende des Gewindebolzens 15 weist einen in Richtung zum Lagergehäuse 3 vorstehenden Rand 23 auf, der die Buchse 21 übergreift und ein Vordringen von Schmutz zu der Buchse 21 erschwert.

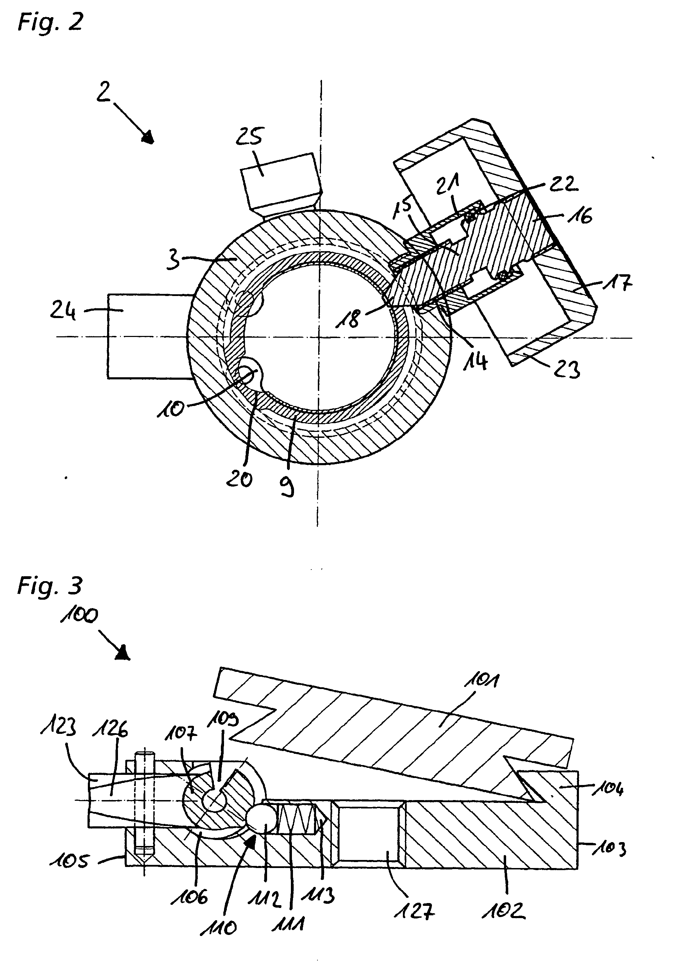

In Fig. 2 ist zu erkennen, dass der Klemmring 9 in entspanntem Zustand nur im Bereich der Materialschwächung 20 an der Lagergehäuse-Innenwand anliegt damit genug Raum zur Aufweitung zur Verfügung steht. Der Spalt 19 im Klemmring 9 ist im Grundzustand ungefähr so breit wie die Materialdicke. Das Widerlager 10 ist im Ausführungsbeispiel durch einen Sicherungsring gebildet, der in einer umlaufenden inneren Nut im Lagergehäuse unterhalb des Klemmringes 9 angeordnet ist. Die beiden anderen angeformten Buchsen 24, 25 sind für weitere Funktionen vorgesehen, die jedoch nicht Gegenstand der Erfindung sind.

In der Fig. 1 ist weiterhin eine Haltevorrichtung 100 gezeigt, die im wesentlichen eine Basis 102 mit einer zentralen Gewindebohrung 127 aufweist, in die der Gewindefortsatz 6 der Gelenkkugel 5 geschraubt ist.

Die Basis 102 weist eine als Schwalbenschwanzführung ausgeformte Aufnahme für eine Wechselplatte 101 auf. Die Wechselplatte 101 wird an einem optischen Instrument befestigt, das mit der Basis 102 verbunden werden soll.

An der etwa rechteckigen Basis 102 ist an einer Längsseite 103 eine Führungsschiene 104 der Schwalbenschwanzführung angeformt. An der gegenüberliegenden Längsseite 105 der Basis 102 ist eine etwa zylinderförmige Nut 106 angeordnet, in die eine zylinderförmige Klemmvorrichtung 107 eingesetzt ist. Damit die Klemmvorrichtung 107 nicht in Längsrichtung 128 aus der Nut 106 fallen kann, ist an beiden Enden der Klemmvorrichtung 107 jeweils ein über die Nut 106 ragender Kragen 108 angeformt. Die Klemmvorrichtung 107 weist eine in Längsrichtung 128 durchgehende, segmentförmige Öffnung 109 auf, die die Gegenführung der Schwalbenschwanzführung bildet. Erfindungsgemäß ist die Klemmvorrichtung 107 drehbar in der Nut 106 gelagert und weist im wesentlichen zwei Stellungen auf.

In der in der Fig. 1 gezeigten, geschlossenen Stellung wird eine eingesetzte Wechselplatte 101 verschieblich in der Führung gehalten.

Eine zweite, offene Stellung der Klemmvorrichtung 107, in der die Wechselplatte 101 nach oben entnommen oder von oben eingesetzt werden kann, ist in der Fig. 3 gezeigt. Beim Einsetzen der Wechselplatte 101 in der offenen Stellung, wird die Wechselplatte 101 zuerst, wie abgebildet, einseitig in die feste Führungsschiene 104 eingehakt und dann abgesenkt. Beim Auflegen der Wechselplatte 101 auf die Klemmvorrichtung 107 dreht diese sich durch den Auflagedruck in die geschlossene Stellung.

Die Rastvorrichtung 110 besteht aus einer Feder 111 und einer Rastkugel 112, die in einer Bohrung 113 in der Basis 102 etwa mittig von der Klemmvorrichtung 107 angeordnet ist und mit einer kugelförmigen Vertiefung 114 in der Klemmvorrichtung 107 zusammenwirkt. Durch die Rastvorrichtung 110 erhält die Offen-Stellung der Klemmvorrichtung 107 eine definierte Lage.

Wie aus einem Vergleich der Figuren 1 und 3 erkennbar ist, wird die Klemmvorrichtung 107 von der Rastkugel 112 beaufschlagt, die mittels der Feder 111 gegen den Umfang der Klemmvorrichtung 107 gepresst wird. Am Umfang der Klemmvorrichtung 107 ist die vorzugsweise kugelförmige oder sonst wie kugelige Vertiefung 114 vorgesehen, in welche die Rastkugel 112 unter Übertragung eines Drehmomentes und Verdrehen der Klemmvorrichtung 107 in die Entnahmestellung einrücken kann. Beim Aushebeln der an der Kamera vorgesehenen Wechselplatte 101 aus der Klemmvorrichtung 107 wird diese noch nicht vollständig in ihre Entnahmestellung verschwenkt, - vielmehr dreht die Klemmvorrichtung 107 erst in Folge des durch die sich in die Vertiefung 114 bewegende Rastkugel 112 bewirkten Drehmoments vollständig in die Entnahmeposition. In dieser Entnahmeposition lässt sich eine Wechselplatte 101 mit ihrer an dem benachbarten Längsrand vorgesehenen Feder ohne größeres Einfädeln in die komplementär geformte Längsnut in der Klemmvorrichtung 107 einschwenken.

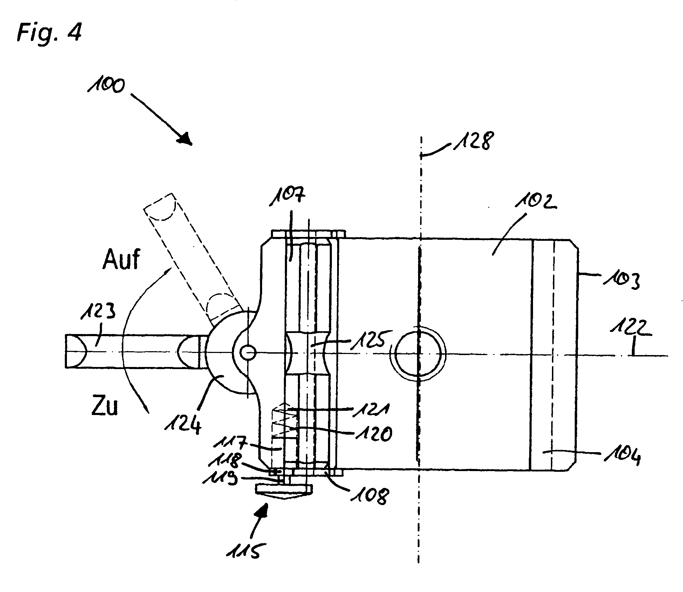

An der Klemmvorrichtung 107 ist weiterhin eine Sicherung 115 angeordnet, die ein unbeabsichtigtes Verdrehen der Klemmvorrichtung 107 und dadurch ein Lösen der Wechselplatte 101 verhindert. Dazu ist, wie in Fig. 4 erkennbar, in der Basis 102 in Längsrichtung 128 neben der Klemmvorrichtung 107 ein Federstift 116 angeordnet, der drei verschiedene Durchmesser 117, 118, 119 aufweist und am Kragen 108 der Klemmvorrichtung 107 eine Kerbe angeordnet. In der geschlossenen Stellung der Klemmvorrichtung 107 liegt die Kerbe an dem mittleren Durchmesser-Teil 118 des Federstifts 116 an und blockiert damit eine Drehbewegung der Klemmvorrichtung 107. Der weiter innen liegende größere Durchmesser 117 liegt in Längsrichtung 128 an dem Kragen 108 an und verhindert in beiden Stellungen der Klemmvorrichtung 107 ein Herausfallen des Federstifts 116 aus der Bohrung 121. Zum Öffnen der Sicherung 115 muss nun der Federstift 116 gegen die Feder 120 nach innen gedrückt werden, so dass der Teil 119 mit dem geringsten Durchmesser dem Kragenumfang gegenübersteht und der Eingriff der Kerbe aufgehoben wird und die Klemmvorrichtung 107 zur Drehung freigegeben wird. Durch das Herausheben der Wechselplatte 101 aus der Führung wird die Klemmvorrichtung 107 in die Offen-Stellung gedreht.

Um ein Verschieben der Wechselplatte 101 in der Schwalbenschwanzführung zu verhindern, kann die Klemmvorrichtung 107 zusätzlich noch in Querrichtung 122 bewegt werden. Dazu ist die Nut 106 in Querrichtung 122 der Basis 102 etwas größer als der Durchmesser der Klemmvorrichtung 107, so dass eine lineare Bewegung möglich ist.

Zur Betätigung der Klemmvorrichtung 107 ist ein Bedienelement 123 vorgesehen, das drehbar an der Basis 102 gelagert ist und ein Exzenterrad 124 aufweist, das mit der Klemmvorrichtung 107 zusammenwirkt. Eine Drehbewegung des Bedienelements 123 wird dadurch in eine Querbewegung der Klemmvorrichtung 107 umgesetzt.

Wie in der Fig. 4 zu erkennen ist, weist die Klemmvorrichtung 107 im Angriffsbereich des Bedienelements eine umlaufende sphärische Nut 125 auf. Am Umfang des Exzenterrads 124 ist eine ebenfalls sphärische Nut 126 angeordnet, die entsprechend der Exzentrizität im Verlauf des Umfangs tiefer wird und mit der Nut 125 in der Klemmvorrichtung 107 zusammenwirkt. Diese sphärische Nut 126 ist notwendig, weil die Klemmvorrichtung 107 zusätzlich drehbar ist.

Nicht abgebildet ist ein weiterer Sicherungsstift, der verhindert, dass die Wechselplatte 101 versehentlich aus der Führung herausgeschoben werden kann.

Die Haltevorrichtung 100 mit der drehbaren Klemmvorrichtung 107 ermöglicht ein einfaches Einsetzen auch schwerer oder sperriger optischer Instrumente auf den Stativkopf 1. Dabei muss der Benutzer sich nicht bücken oder umständlich die Führung in der Haltevorrichtung 100 ertasten. Weiterhin ermöglicht der erfindungsgemäße Kugelkopf 2 die sichere Aufnahme und Arretierung der schweren Instrumente, da die Tragkraft durch die gleichmäßige Klemmung der Gelenkkugel 5 gegenüber dem Stand der Technik entsprechend vergrößert wird.

### Bezugszeichen

- 1: Stativkopf
- 2: Neigevorrichtung
- 3: Lagergehäuse
- 4: Oberes Ende
- 5: Gelenkkugel
- 6: Gewindefortsatz
- 7: Gleitlager
- 8: Lagerfläche
- 9: Klemmring
- 10: Widerlager
- 11: Längsmittelachse
- 12: Schrägfläche
- 13: Gegenschräge
- 14: Gewindebohrung
- 15: Gewindebolzen
- 16: Äußeres Ende
- 17: Handrad/Beaufschlagungselement
- 18: Inneres Ende
- 19: Spalt
- 20: Materialschwächung
- 21: Buchse
- 22: O-Ring
- 23: Rand
- 24: Buchse
- 25: Buchse
- 100: Haltevorrichtung
- 101: Wechselplatte
- 102: Basis
- 103: Längsseite (fest)
- 104: Führungsschiene (fest)
- 105: Längsseite
- 106: Nut
- 107: Klemmvorrichtung
- 108: Kragen
- 109: Öffnung
- 110: Rastvorrichtung
- 111: Feder
- 112: Kugel
- 113: Bohrung
- 114: Vertiefung
- 115: Sicherung
- 116: Federstift
- 117: Durchmesser groß
- 118: Dito Mittel
- 119: Dito Klein
- 120: Feder
- 121: Bohrung
- 122: Querrichtung
- 123: Bedienelement
- 124: Exzenterrad
- 125: Nut Klemmvorr.
- 126: Nut Exzenter
- 127: Gewindebohrung
- 128: Längsrichtung

## Patentansprüche

1. Stativkopf mit einer Haltevorrichtung (100) zur Aufnahme einer Kamera, eines Fernglases, eines Spektivs oder dergleichen optischen Instruments mit einer Wechselplatte (101), mit einer Basis (102) zur Montage an einem Stativ oder dergleichen Tragegestell, die eine Schwalbenschwanzführung mit einer Führungsschiene (104) zur verschieblichen Lagerung der Wechselplatte (101) und einer zur Basis (102) relativ beweglichen Klemmvorrichtung (107) zur Festlegung der Wechselplatte (101) in der Führungsschiene (104), wobei an der Basis (102) längsseitig die Führungsschiene (104) der Schwalbenschwanzführung angeformt ist und wobei die Klemmvorrichtung (107) im wesentlichen zwei Stellungen aufweist, bei welchen in einer Schließstellung die Wechselplatte (101) verschieblich in der Führung aufgenommen ist und in einer Offenstellung die Wechselplatte (101) zur Aufnahme freigegeben ist, wobei die Klemmvorrichtung (107) durch Auflegen der mit dem optischen Instrument verbindbaren Wechselplatte (101) von ihrer Offenstellung in ihre Schließstellung überführbar ist und eine in Längsrichtung orientierte segmentförmige Öffnung (109) aufweist, welche die Gegenführung der Schwalbenschwanzführung bildet, **dadurch gekennzeichnet, dass** an der der Führungsschiene (104) gegenüber liegenden Längsseite (105) eine Nut (106) angeordnet ist, in der eine zylinderförmige Klemmvorrichtung (107) um eine Längsachse drehbar gelagert ist, und dass an der Klemmvorrichtung (107) ein federbeaufschlagtes Sicherungselement (115), gegen unbeabsichtigtes Drehen der Klemmvorrichtung (107) vorgesehen ist, wobei die Federkraft der Feder senkrecht zur Drehbewegungsrichtung der Klemmvorrichtung (107) wirkt.

2. Stativkopf nach Anspruch 1, **dadurch gekennzeichnet, dass** die Klemmvorrichtung (107) zum Festlegen der Wechselplatte (101) quer zur Längsachse linear verschieblich gelagert ist, ein drehbar gelagertes Bedienelement (123) zur Handbetätigung aufweist und Mittel (124) zur Übertragung der Drehbewegung des Bedienelements (123) in eine Linearbewegung der Klemmvorrichtung (107).

## Claims

1. Tripod head with a holding device (100) for accommodating a camera, a pair of binoculars, a spotting scope or similar optical instrument with an exchangeable plate (101), with a base (102) for mounting on a tripod or similar supporting frame, which base has a dovetail guide with a guide rail (104) for displaceably mounting the exchangeable plate (101) and a clamping device (107) movable relative to the base (102) and intended to fix the exchangeable plate (101) in the guide rail (104), wherein the guide rail (104) of the dovetail guide is integrally formed on the longitudinal side of the base (102) and wherein the clamping device (107) has essentially two positions, in which, in a closed position, the exchangeable plate (101) is displaceably accommodated in the guide and, in an open position, the exchangeable plate (101) is released for accommodation purposes, wherein the clamping device (107) can be transferred from its open position into its closed position by placement of the exchangeable plate (101) which can be connected to the optical instrument and has a segment-shaped opening (109) which is oriented in the longitudinal direction and which forms the counter-guide of the dovetail guide, **characterized in that** a groove (106) is arranged on the longitudinal side (105) situated opposite the guide rail (104), in which groove a cylindrical clamping device (107) is rotatably mounted about a longitudinal axis, and **in that** a spring-loaded securing element (115) is provided on the clamping device (107) to prevent inadvertent rotation of the clamping device (107), wherein the spring force of the spring acts perpendicularly to the rotational movement direction of the clamping device (107).

2. Tripod head according to Claim 1, **characterized in that**, in order to fix the exchangeable plate (101), the clamping device (107) is linearly displaceably mounted transversely to the longitudinal axis, has a rotatably mounted operating element (123) for manual actuation and means (124) for transferring the rotational movement of the operating element (123) into a linear movement of the clamping device (107).

## Revendications

1. Tête de trépied comprenant un dispositif de fixation (100) pour recevoir un appareil photo, un télescope, une longue-vue ou un instrument optique similaire, comprenant une plaque de montage (101), avec une base (102) pour le montage sur un trépied ou un bâti de support similaire, qui présente un guide en queue d'aronde avec un rail de guidage (104) pour le support déplaçable de la plaque de montage (101) et un dispositif de serrage (107) déplaçable par rapport à la base (102) pour fixer la plaque de montage (101) dans le rail de guidage (104), le rail de guidage (104) du guide en queue d'aronde étant façonné du côté longitudinal au niveau de la base (102) et le dispositif de serrage (107) présentant essentiellement deux positions, dans lesquelles, dans une position de fermeture, la plaque de montage (101) est reçue de manière déplaçable dans le guide, et dans une position d'ouverture, la plaque de montage (101) est libérée en vue d'une réception, le dispositif de serrage (107) pouvant être transféré de sa position d'ouverture dans sa position de fermeture par positionnement de la plaque de montage (101) pouvant être connectée à l'instrument optique et présentant une ouverture en forme de segment (109) orientée dans la direction longitudinale, laquelle forme le guide conjugué du guide en queue d'aronde, **caractérisée en ce qu'**une rainure (106) est disposée au niveau du côté longitudinal (105) opposé au rail de guidage (104), dans laquelle rainure un dispositif de serrage de forme cylindrique (107) est monté à rotation autour d'un axe longitudinal, et **en ce qu'**un élément de fixation (115) sollicité par ressort est prévu au niveau du dispositif de serrage (107) de manière à empêcher une rotation accidentelle du dispositif de serrage (107), la force de ressort du ressort agissant perpendiculairement à la direction du mouvement de rotation du dispositif de serrage (107).

2. Tête de trépied selon la revendication 1, **caractérisée en ce que** le dispositif de serrage (107) est monté de manière déplaçable linéairement transversalement à l'axe longitudinal pour fixer la plaque de montage (101), et présente un élément de commande monté à rotation (123) pour la commande manuelle et des moyens (124) pour transférer le mouvement de rotation de l'élément de commande (123) en un mouvement linéaire du dispositif de serrage (107).
